Europäisches Patentamt

European Patent Office

Office européen des brevets

(11) Publication number: **0 123 172**
**B1**

(12) **EUROPEAN PATENT SPECIFICATION**

(45) Date of publication of patent specification: **29.04.87**

(21) Application number: **84103600.7**

(22) Date of filing: **31.03.84**

(51) Int. Cl.⁴: **F 16 K 27/02, F 16 K 11/00, B 23 P 15/00**

(54) **A mixer tap.**

(30) Priority: **11.04.83 GB 8309745**

(43) Date of publication of application:
**31.10.84 Bulletin 84/44**

(45) Publication of the grant of the patent:
**29.04.87 Bulletin 87/18**

(84) Designated Contracting States:
**CH DE FR LI**

(56) References cited:
**FR-A-1 598 379**
**GB-A-2 104 625**

(73) Proprietor: **KUGLER Fonderie et Robinetterie S.A.**
**19, avenue de la Jonction Case postale 240**
**CH-1211 Genève 8 (CH)**

(72) Inventor: **Crinel, Lucien**
**97 B, Route de Genève**
**F-74240 Gaillard (FR)**

(74) Representative: **Micheli, Michel-Pierre et al**
**MICHELI & CIE 118, Rue du Rhône Case Postale 47**
**CH-1211 Genève 6 (CH)**

EP 0 123 172 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a mixer tap provided with a single outlet spout for water.

Such mixer taps comprise a body provided with two water intake apertures, one for hot water and the other for cold water, and flow ducts for the hot and the cold water to flow to two distribution apertures which each feed the spout. Such taps also comprise control means for closing off and regulating the flow section of each of the flow ducts.

In general, the body of such taps is advantageously produced by casting, which makes it possible for the production of shapes which are often very complicated, with the minimum amount of machining and therefore as inexpensively as possible. Such taps are for example described in documents GB—A—2.104.625 and FR—A—1.598.379 showing tabs having a body provided with an outlet cavity in which a spout is received, having further two water inlet bores extending parallely to the axis of the body, said inlet bores being connected to the outlet cavity through passages provided in the body passing through corresponding transverse control bores.

However, casting equipment is very bulky and burdensome so that small or medium size tap and plumbing fitting manufacturers either have to have their casting done outside or they have to use other production methods such as for example cutting or turning.

According to the invention there is provided a mixer tap, of the type indicated hereabove but characterized by the features recited in the appended claims.

Such a mixer tap can be produced by turning and other simple cutting operations and the overall design of and the layout of the bores therein can permit a reduction in the outside dimensions of the body.

The invention is diagrammatically illustrated by way of example in the accompanying drawings, in which:

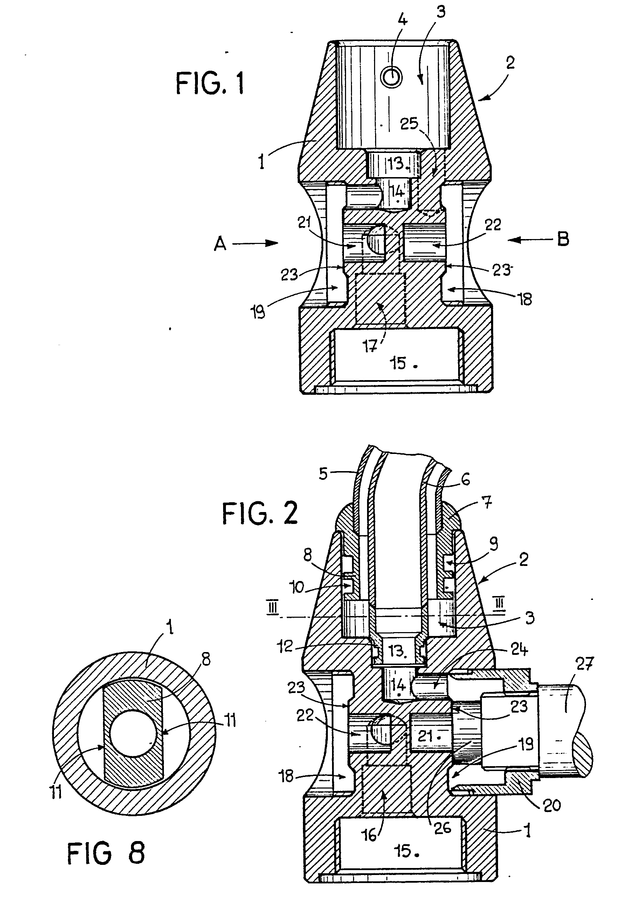

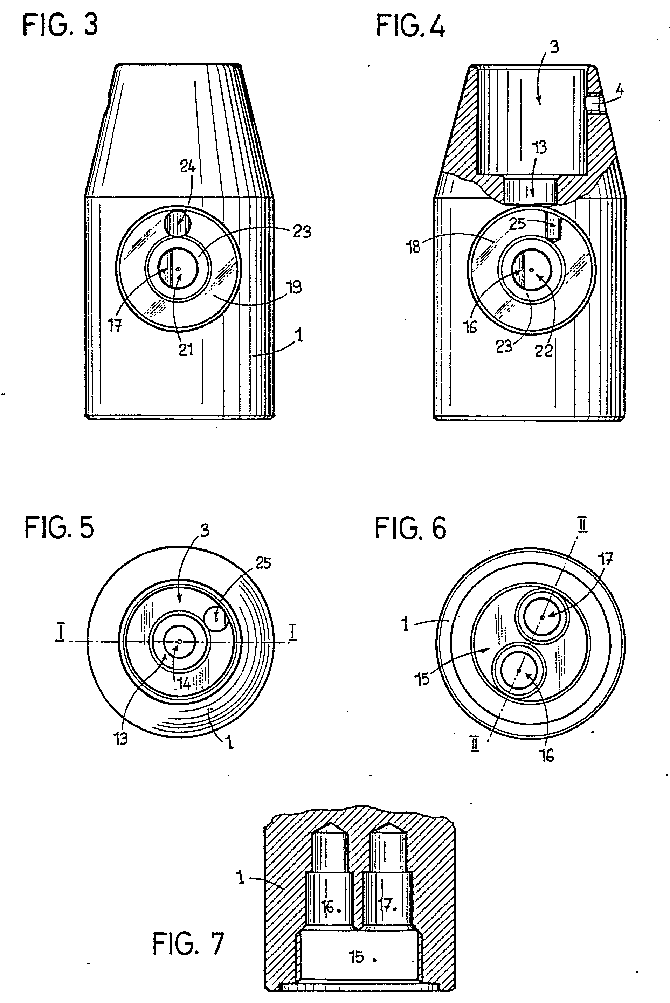

Figure 1 is a longitudinal section, taken on line I—I in Figure 5, of a body of a mixer tap according to the invention;

Figure 2 is also a longitudinal section of the body of the mixer tap of Figure 1, but illustrating the other half thereof, and including part of a spout and part of one control closure member;

Figure 3 is a view taken in the direction of arrow A of Figure 1;

Figure 4 is a partly sectioned view of the body taken in the direction of arrow B of Figure 1;

Figure 5 is a plan view of the body of Figure 1;

Figure 6 is an underneath plan view of the body of Figure 1;

Figure 7 is a view of part of the body in section taken on line II—II in Figure 6; and

Figure 8 is a view in section taken on line III—III in Figure 2 but omitting the control closure member.

A cylindrical body 1 of the mixer tap has, for aesthetic reasons, an upper frusto-conical portion 2. The top face of the body 1 has an outlet cavity therein formed by bores of three different diameters. A first bore 3 of largest diameter receives the end 7 of a spout having two separate conduits 5 and 6. The end 7 of the spout has a first part 8 which engages in the first bore 3, and is held in position in an axial direction by a screw which is screwed into a threaded transverse bore 4 in the wall of the portion 2 of the body 1 and which engages in a peripheral groove 9 provided in the first part 8 of the spout. The first part 8 has a second peripheral groove 10 therein for receiving a toric seal. The lower part of the first part 8 has two flat faces 11, formed by milling, as indicated in Figure 8. The end 7 of the spout also comprises a second part 12 provided with a peripheral groove for receiving a seal and engaged in a second bore 13 of the outlet cavity in the body 1, coaxial with but of smaller diameter than the first bore 3. Finally, a third bore 14 of the cavity formed in the body 1 comprises a blind coaxial bore which is of smaller diameter than the second bore 13.

By virtue of the particular end 7 of the spout, the inner conduit 6 of the spout is in communication only with the third bore 14 in the body while the outer conduit 5 is in communication only with the first bore 3 of the cavity by virtue of the flat faces 11.

The three bores 3, 13 and 14 of the cavity in the body 1 are coaxial with the longitudinal axis of the body 1 and occupy the upper part thereof.

A lower part of the body 1 has a cylindrical screw-threaded recess 15 in the bottom of which are formed two water intake bores 16 and 17 for receiving the ends of respective water intake conduits, for hot water and cold water respectively, or vice-versa.

A middle portion of the body 1 has two control bores 18 and 19 therein, the axes of which are perpendicular to the longitudinal axis of the body 1, and which are screw-threaded for receiving fixing collars 20 of taps.

The control bores 18 and 19 are connected by inlet bores 21 and 22 to the water intake bores 17 and 16 which are respectively connected to the water intake conduits. In each control bore there is an annular portion 23, which may be raised, around the inlet bores 21 and 22, forming a seat for a flow regulating closure member 26 controlled by a control member (not shown) mounted in a cap member 27 which is secured by the respective fixing collar 20.

The control bore 19 is connected to the third bore 14 of the cavity in the body, and therefore to the inner conduit 6 of the spout, by a connection bore 24 while the control bore 18 is connected to the first bore 3 of the cavity body in the body 1 by a connection bore 25 and therefore to the outer conduit 5. The axis of the connection bore 24 is perpendicular to the longitudinal axis of the body 1 whereas the axis of the connection bore 25 is parallel to the longitudinal axis of the body 1.

In the illustrated embodiment, the control bores 18 and 19 are coaxial but in alternative embodiments, the axes of the control bores may be at an angle to each other.

In contrast, one of the original features of this embodiment, and which makes it possible to minimise the outside diameter of the body 1, is that a first plane including the axes of the water intake bores 16 and 17 is always at an angle to a second plane which includes both the longitudinal axis of the body 1 and the axis of one of the control bores 18, 19. In fact, it is only by virtue of that particular arrangement, that the communications between the water intake bore 17 and the inner conduit 6 of the spout and the water intake bore 16 and the outer conduit 5 of the spout respectively may be formed by means of simple machining operations, with a minimum diameter in respect of the body 1.

As will be seen, the water intake bore 16 and the inlet bore 22 communicate since they partially intersect, so that water which is introduced at the bore 16 passes into the control bore 18 if the respective closure member 26 is in an open condition. From the control bore 18, the water then passes by way of the connection bore 25 into the first bore 3 of the cavity, which first bore 3, due to the flat faces 11, communicates with the outer conduit 5 of the spout.

Likewise, since the water intake bore 17 partially intersects the inlet bore 21, water which is introduced at the bore 17 passes into the control bore 19. If the respective closure member 26 is in an open condition, that water passes by way of the connection bore 24 to the third bore 14 which communicates with the inner conduit 6 of the spout. The hot and cold waters are therefore completely separated.

In the illustrated embodiment, the two control bores 18 and 19 are coaxial and the angle between the longitudinal plane passing through the axis of the control bores 18 and 19 and the longitudinal plane passing through the axes of the two water intake bores 16 and 17 is preferably 45°C.

In alternative embodiments, it is possible to achieve the desired result, namely a body which is of a simple form, being produced by simple machining operations from solid portions of small-diameter, so long as the longitudinal plane containing the axes of the two water intake bores 16 and 17 is at an acute angle to the axis of at least one of the arms 20.

The body 1 can be produced by simple machining operations from brass bar stock. The layout of the bores of the body in particular can be such that it can be easily produced, that is to say, the machining operations need only involve drilling, tapping and turning, and the diameter of the brass bar from which it is machined can be small so as to economise on material.

## Claims

1. A mixer tape comprising a body (2), a spout (7) engaged in an outlet cavity (3, 13, 14) of the body (2), one end of said body (2) having two water intake bores (16, 17) therein extending parallely to the longitudinal axis of the body (2), and two transverse control bores (18, 19) in the body (2) each of which is connected to one of said water intake bores (16, 17) and to said outlet cavity (3), characterized by the fact that the body (2) is machined from a solid bar of material; that the axes of the water intake bores (16, 17) are located in a first plane forming an acute angle with a second plane including the longitudinal axis of the body (2) and the axis of one of the control bores (18 or 19).

2. A mixer tap according to Claim 1, in which the two control bores (18, 19) are coaxial with the axis thereof perpendicular to the longitudinal axis of the body (2).

3. A mixer tap according to Claim 1 or Claim 2, in which the angle between the first plane and the second plane is 45°.

4. A mixer tap according to any one of Claims 1 to 3, including a respective closure member (26) mounted in each of the control bores (18, 19) with each closure member (26) having an active face which co-operates with a seat (23) provided at the inner end of the respective control bores (18, 19).

5. A mixer tap according to Claim 4, in which each control bore has an inlet bore (21, 22), surrounded by the respective seat (23), which at least partially intersects a respective one of said water intake bores (16, 17).

6. A mixer tap according to Claim 5, in which a first (18) of the control bores (18, 19) is connected by way of a first connection bore (25), having its axis parallel to the longitudinal axis of the body (2), to a first, large diameter portion (3) of the axially extending outlet cavity in the opposite end of the body to said one end.

7. A mixer tap according to Claim 6, in which the other (19) of the control bores (18, 19) is connected by way of a second connection bore (24), having its axis perpendicular to the longitudinal axis of the body (2), to a third (14), blind, small-diameter bore of said axially extending outlet cavity.

8. A mixer tap according to Claim 7, including a spout (7) with an end portion engaged in the axially extending outlet cavity and having a portion (12) engaged in a second (13), intermediate diameter bore of the axially extending outlet cavity (3, 13, 14) and thereby sealingly separating the first (3) and third (14) bores of the outlet.

## Patentansprüche

1. Mischhahn mit einem Körper (2), mit einem in einen Austrittshohlraum (3, 13, 14) des Körpers (2) eingreifenden Auslauf (7), wobei in einem Ende des Körpers (2) zwei Wassereinlaufbohrungen (16, 17) vorgesehen sind, die parallel zur Längsachse des Körpers (2) verlaufen, und mit zwei quer verlaufenden Steuerbohrungen (18, 19) im Körper (2), deren jede mit einer der Wassereinlaufbohrungen (16, 17) und mit dem Austrittshohlraum (3) verbunden ist, dadurch gekennzeichnet, daß der Körper (2) aus einer Vollstange herausgearbeitet ist; daß die Achsen der Wassereinlaufbohrungen (16, 17) in einer ersten Ebene liegen, die einen spitzen Winkel mit einer die Längsachse des Körpers (2) und die Achse einer der Steuerbohrungen (18 oder 19) enthaltenden zweiten Ebene bildet.

2. Mischhahn nach Anspruch 1, wobei die beiden Steuerbohrungen (18, 19) koaxial sind und ihre Achse zur Längsachse des Körpers (2) senkrecht verläuft.

3. Mischhahn nach Anspruch 1 oder 2, wobei der Winkel zwischen der ersten und der zweiten Ebene 45° beträgt.

4. Mischhahn nach einem der Ansprüche 1—3, umfassend ein in jeder Steuerbohrung (18, 19) angeordnetes Verschlußelement (26), wobei jedes Verschlußelement (26) eine Wirkfläche hat, die mit einem am inneren Ende der jeweiligen Steuerbohrung (18, 19) vorgesehenen Sitz (23) zusammenwirkt.

5. Mischhahn nach Anspruch 4, wobei jede Steuerbohrung eine von dem jeweiligen Sitz (23) umgebene Eintrittsbohrung (21, 22) hat, die wenigstens teilweise jeweils eine der Wassereinlaufbohrungen (16, 17) schneidet.

6. Mischhahn nach Anspruch 5, wobei ein erste (18) der Steuerbohrungen (18, 19) über eine erste Verbindungsbohrung (25), deren Achse parallel zur Längsachse des Körpers (2) verläuft, mit einem ersten, durchmessergroßen Abschnitt (3) des axial verlaufenden Austrittshohlraums in dem zu dem einen Ende des Körpers entgegengesetzten Ende verbunden ist.

7. Mischhahn nach Anspruch 6, wobei die andere (19) der Steuerbohrungen (18, 19) über eine zweite Verbindungbohrung (24), deren Achse senkrecht zur Längsachse des Körpers (2) verläuft, mit einer dritten (14), durchmesserkleinen Blindbohrung des in Axialrichtung verlaufenden Austrittshohlraums verbunden ist.

8. Mischhahn nach Anspruch 7, umfassend einen Auslauf (7) mit einem in dem axial verlaufenden Austrittshohlraum eingreifenden Endabschnitt und mit einem Abschnitt (12), der in eine zweite (13), Zwischendurchmesser-Bohrung des in Axialrichtung verlaufenden Austrittshohlraums (3, 13, 14) eingreift und dadurch die erste (3) und die dritte (14) Bohrung des Austrittshohlraums dichtend voneinander trennt.

**Revendications**

1. Un robinet mélangeur comprenant un corps (2), un goulot (7) engagé dans une cavité de sortie (3, 13, 14) du corps (2), une extrémité de ce corps (2) présentant deux perçages d'entrée d'eau (16, 17) s'étendant parallélement à l'axe longitudinal du corps (2), et deux alésages de commande transversaux (18, 19) pratiqués dans le corps (2) chacun de ceux-ci étant relié à l'un de ces perçage d'entrée d'eau (16, 17) et à cette cavité de sortie (3), caractérisé par le fait que le corps (2) est usiné à partir d'une barre pleine d'un matériau; que les axes des perçages d'entrée d'eau (16, 17) sont disposés dans une premier plan formant un angle aigu avec un second plan contenant l'axe longitudinal du corps (2) ainsi que l'axe d'un des alésages de commande (18 ou 19).

2. Robinet mélangeur selon la revendication 1, caractérisé par le fait que les deux alésages de commande (18, 19) sont coaxiaux, leurs axes étant perpendiculaires à l'axe longitudinal du corps (2).

3. Robinet mélangeur selon la revendication 1 ou 2, caractérisé par le fait que l'angle entre le premier plan et le second plan est de 45°.

4. Robinet mélangeur selon l'une des revendications 1 à 3, caractérisé par le fait qu'il comporte un organe de fermeture respectif (26) monté dans chaque alésage de commande (18, 19) chacun de ces organes de fermeture (26) présentant une face active qui coopère avec un siège (23) prévu à l'extrémité interne des alésages de commande respectifs (18, 19).

5. Robinet mélangeur selon la revendication 4, caractérisé par le fait que chaque alésage de commande présente un perçage d'entrée (21, 22), entouré par un siège correspondant (23), qui intersecte au moins partiellement l'un de ces perçages d'arrivée d'eau (16, 17) respectivement.

6. Robinet mélangeur selon la revendication 5, caractérisé par le fait qu'un premier (18) des alésages de commande (18, 19) est relié à l'aide d'un perçage de liaison (25) ayant un axe parallèle à l'axe longitudinal du corps (2) à une première partie (3) de grand diamètre de la cavité de sortie axiale située à l'autre extrémité du corps.

7. Robinet mélangeur selon la revendication 6, caractérisé par le fait que l'autre (19) des alésages de commande (18, 19) est relié par un second perçage de liaison (24) dont l'axe est perpendiculaire à l'axe longitudinal du corps (2), à un troisième perçage (14) borgne et de plus petit diamètre de cette cavité axiale de sortie.

8. Robinet mélangeur selon la revendication 7, caractérisé par le fait qu'il comporte un goulot (7) dont une extrémité est engagée dans la cavité de sortie axiale et présentant une partie (12) engagée dans le second perçage (13) de diamètre intermédiaire de cette cavité axiale de sortie (3, 13, 14) et séparant ainsi de façon étanche les premier (3) et troisième (14) perçages de cette sortie.

**FIG. 1**

**FIG. 2**

**FIG 8**

**0 123 172**

## FIG. 3

## FIG. 4

## FIG. 5

## FIG. 6

## FIG. 7